# EUROPEAN PATENT APPLICATION

(11) **EP 2 177 913 A1**
(43) Date of publication of application: **21.04.2010**
(21) Application number: 08018205.8
(22) Date of filing: 17.10.2008
(51) Int. Cl.: G01N 35/00

(54) **Laboratory instrument with function monitoring**

(71) Applicant: Roche Diagnostics GmbH, 68305 Mannheim (DE); F. Hoffmann-La Roche AG, 4070 Basel (CH)
(72) Inventor: Sidler, Thomas, 6331 Hünenberg (CH); Merk, Thomas, 6203 Sempach Station (CH); Bachmann, Hans-Rudolf, 5619 Büttikon (CH)
(74) Representative: Jany, Peter

(57) **Abstract**

The invention refers to a laboratory instrument (1) of a laboratory system with function monitoring. In order to reduce the amount of monitoring data to be transferred in a bus of the laboratory instrument (1) a data reduction is proposed, wherein characteristic data sets (13) are generated from original sensed data of a sensor (11) and transmitted via the bus to the monitoring unit of the instrument control software (5). Optionally data may be reconstructed from the characteristic data sets (13) corresponding approximately to the sensed data of the sensor (11).

## Description

This invention relates to a clinical or research laboratory instrument with function monitoring of at least one function of said laboratory instrument, and to a corresponding method for monitoring at least one function of a laboratory instrument of a laboratory system with function monitoring.

Such a laboratory instrument may be in particular a system component of laboratory system providing an integrated diagnostic system with reagents, disposables, consumables etc. The laboratory instrument may be capable of performing the functions of a single or of several individual instruments, e.g. an analytical chemistry processing center, and, more particularly, an automated laboratory instrument useful in the performance of numerous chemical, biochemical and biological assays and reactions.

Modern research and clinical laboratory procedures include biological and chemical analysis of specimen-substances that require extensive fluid manipulations. Many of the routine applications used for analysis are bioassays, immunoassays, viral assays, mitogen assays, serology, protein assays, lymphokine assays, and sample aliquoting. Experimental biological and clinical research includes the use of photometric analysis of chemical reactions after the reactions have reached equilibrium or a fixed end point. Certain enzyme assays require a two-point or multi-point analysis embodying kinetic assays.

An important field is analyzing samples with a nucleic acid amplification technique. The purpose of the analysis is the detection (presence or absence of an analyte) and/or the quantification of the concentration of an analyte in samples. The analyte may be a nucleic acid: RNA or DNA or derivatives there off. The derivatives (Nucleic Acids, NA) mentioned include molecules which are accessible directly or indirectly (e.g. after chemical modification) to a NA amplification method (e.g. DNA-polymerase, Transcriptase, Reverse-Transcriptase, etc.). The target analyte can be e.g. genetic material with biological origin e.g. for genetic testing, in case of infectious diseases the analyte can be nucleic acid material from a virus or bacteria, in case of gene-expression the analyte can be m-RNAs, the analyte can also be methylated DNA.

The analysis is performed by a laboratory system using a laboratory instrument for processing samples, e.g. with multi-well microtiter plates. Embodiments of such plates include those useful for conducting thermocycled amplification of polynucleotides, including polymerase chain reaction. A variety of tools and techniques have been developed to detect and investigate the structure and function of individual genes and the proteins they express. Such tools include polynucleotide probes, which comprise relatively short, defined sequences of nucleic acids, typically labelled with a radioactive or fluorescent moiety to facilitate detection. Probes may be used in a variety of ways to detect the presence of a polynucleotide sequence, to which the probe binds, in a mixture of genetic material. Nucleic acid sequence analysis is also an important tool in investigating the function of individual genes. Several methods for replicating, or "amplifying," polynucleic acids are known in the art, notably including polymerase chain reaction (PCR). Indeed, PCR has become a major research tool, with applications including cloning, analysis of genetic expression, DNA sequencing, and genetic mapping.

There are many circumstances in which multiple batch reactions need to be performed such as Genotyping applications. DNA amplifications by means of polymerase chain reaction (PCR) or primer extension is a method routinely used in genotyping, such as SNP (single nucleotide polymorphism) analysis. SNP specific targets are observed via reaction plate from either top or bottom (after a PCR amplification, primer extension or hybridisation step) or sample/reagent removed and interpreted via spectroscopy, mass spectroscopy, sequencing or hybridisation. These batch reactions can be performed on reaction plates. These reaction plates, in many such applications, are often referred to as microtiter plates. These reaction plates have generally supplied as injection moulded, one piece reaction plates having multiple wells formed therein in the form of miniature test tubes.

This invention relates to a single-purpose or a multi-purpose laboratory instrument, as well automating the performance of heretofore manual analytical chemistry and biological experimental assay procedures. A multi-purpose laboratory instrument combines the operation of a number of existing discrete instruments. Such a laboratory instrument is known from US 5,206,568.

The laboratory instrument and the laboratory system for performing such laboratory procedures require several units for handling the samples, the process fluids, the vessels or microtiter plates and so on, in particular in automatic or partially automatic procedures. Such units may be photometers, blockcyclers, transfer heads, incubators, disposables, sensors and actuators.

It is clear from the numerous units and steps to be controlled and surveyed in such a laboratory instrument that for the individual laboratory units comprised in the laboratory instrument and for the overall system numerous sensors are required for sensing parameters like temperature, position, fluid flow, fluid level and so on and that these data have to be monitored by a suitable monitoring unit. In addition, not only the sensing signals, but also the controlling signals may have to be transferred from a control unit to the individual actuators in the laboratory instrument. Because usually the sensors provide sensed data with a high sample rate or continuously and also the control of the actuators is performed with a high rate, the laboratory instrument requires a sophisticated data bus for transmitting all the sensed data and control data from the sensors to the devices, e.g. to the monitoring unit, and from the control unit to the devices.

It is therefore an object of the present invention to provide a data reduction for enabling use of bus systems with less capacity, e.g. a low capacity field bus, for transferring only the substantial features of data to be transmitted, so that not all raw data, but only the substantial features of the raw data have to be transmitted for enabling monitoring the function of the laboratory units with less data load of the bus.

A further object of the invention is providing a corresponding method for monitoring the function of laboratory unit in a laboratory instrument.

Another object of the invention is providing reconstructing data from the transferred data which correspond approximately to the raw sensed data with a sufficient precision, so that it is only required to transmit the substantial features of the reduced data and not the huge amount of raw data.

A laboratory instrument of a laboratory system with function monitoring of at least one function of said laboratory instrument meeting these needs is provided according to the invention by a laboratory instrument comprising a laboratory unit, a sensor, sensing a parameter of the laboratory unit and providing sensed data regarding said parameter, said sensed data having a data volume, a data reduction unit processing said sensed data received from the sensor and generating characteristic data sets from the sensed data at an output port, said characteristic data sets having a lower data volume than said sensed data received from the sensor, and the laboratory instrument or the laboratory system further comprising a monitoring unit receiving said characteristic data sets from the output port of the data reduction unit and monitoring the function of said laboratory unit on the basis of said characteristic data sets.

A method for monitoring at least one function of a laboratory instrument of a laboratory system with function monitoring meeting these needs comprises sensing a parameter of a sensor of the laboratory unit, said sensor providing sensed data regarding said parameter, said sensed data having a data volume, processing said sensed data received from the sensor and generating characteristic data sets from the sensed data at an output port of a data reduction unit, said characteristic data sets having a lower data volume than said sensed data received from the sensor, and receiving said characteristic data sets from the output port of the data reduction unit by a monitoring unit of the laboratory instrument or the laboratory system and monitoring the function of said laboratory unit on the basis of said characteristic data sets.

The invention is based on the finding that it is possible to extract the substantial features of sensed raw data relating to a laboratory unit by generating characteristic data sets, thus performing a data reduction of the sensed data, to transmit the characteristic data sets and to monitor the function of the laboratory unit by using the characteristic data sets having a reduced data volume instead of the raw sensor data having a high data volume, thus only requiring transmitting the characteristic data sets in the laboratory instrument instead of the original sensed data. It has also turned out that it is possible to reconstruct data from the characteristic data sets corresponding sufficiently precise to the original sensed data.

Performing a data reduction as such is known in the field of image processing, e.g. by using splines, detecting edges according the method of Canny or detecting the slope. However, the methods and algorithms used in that technical field are very complicated due to the multi dimensional fields used and the color information to be processed. Therefore, the methods known from image processing are not suitable for the present purpose and up to now no method has been applied for data reduction in the field of laboratory instruments.

The invention provides a possibility to reduce data with very high density to a minimum of data packets to be transmitted, wherein the receiver of the data packets can either use the characteristic data sets for monitoring and/or controlling a laboratory unit. It is also within the scope of the present invention to reconstruct the original data with certain, but usually not disadvantageous inaccuracy for monitoring or controlling a laboratory unit.

Data reduction according to the present invention means to extract from the sensed data such characteristic data which allow monitoring of the laboratory unit.

Such characteristic data are closely related to analytical instruments and concern pipetting processes, detection processes, automation of such instruments and so on. Characteristic data may be changes in data progression, e.g. a change from rising raw data values to falling raw data values or the passing of a threshold. Data reduction may also involve pre-processing of raw data by flattening, offset correction, filtering, integration, differentiation and so on. Pre-processing in combination with data reduction is therefore able not only to detect signal peaks but also turning points and the like. Data reduction may further mean to record a signal at a predetermined point in time, e.g. after instruction a pipetting unit to dispense a certain volume, to wait 10 seconds and then to record the pressure in the pipette head. The extracted characteristic data may be combined with additional data to yield characteristic data sets. Such additional data may be the time of occurrence of characteristic data, data of other sensors at the same time of the characteristic data, the volume of the characteristic data or a qualifier which qualifies the extracted characteristic data and so on.

However, not only the characteristic data sets can be used directly, but they also can be preprocessed in an interims step, wherein the laboratory instrument comprises an interface receiving said characteristic data sets at an input port and providing corresponding characteristic data sets corresponding to said characteristic data sets at an output port, wherein said corresponding characteristic data sets are received by the monitoring unit from the output port of the interface and the monitoring unit monitors the function of said laboratory unit on the basis of said corresponding characteristic data sets.

According to a further embodiment the laboratory instrument may comprise a workflow unit having stored therein a pattern of characteristic workflow data and further comprising a comparison unit for comparing said characteristic workflow data to said characteristic data sets or to corresponding characteristic data sets corresponding to said characteristic data sets. Such workflow data may comprise typical procedure sequences of data of the laboratory units involved in using the laboratory instrument for a specific purpose. Upon comparing the characteristic data sets or corresponding characteristic data sets to the expectation values comprised in workflow data the monitoring unit can check, on the basis of a very much reduced amount of data, whether the units are working properly as expected and whether the process performed with the laboratory instrument is running as expected or usual.

Further the laboratory instrument may comprise an indication unit, said indication unit providing an indication if said comparison unit detects a mismatch between said characteristic workflow data and said characteristic data sets or corresponding characteristic data sets. The indication may depend on the amount of deviation noted and may range from setting a pure flag in the data over sending or displaying a message to a user attracting his attention to causing an interrupt of the process performed by the laboratory unit or the laboratory device.

Preferably the monitoring unit is designed to control the laboratory unit in response to the received characteristic data sets or corresponding characteristic data sets. In this manner the result of the monitoring may be used for active controlling the process performed by the laboratory unit or the laboratory device.

The laboratory unit preferably may be an analytical unit, e.g. for analyzing a medical or biological significant parameter of a sample. According to a preferred embodiment the laboratory unit is a pipetting device for aspiration and/or withdrawal of a fluid and said sensor is adapted to monitor a condition of said pipetting device or a fluidic condition, parameter or level of fluid pipetted by said pipetting device. Such a condition or parameter may be the presence or absence of fluid, the temperature of a fluid, its pressure or the flow rate of a fluid.

According to another preferred embodiment the laboratory unit is an actuation unit and said sensor is adapted to sense a parameter of said actuation unit or a parameter of a device actuated by said actuation unit. Such a parameter may preferably be a position, a velocity or acceleration.

A laboratory system according to the invention comprises a laboratory instrument according to invention and further devices and units for providing a laboratory system, e.g. a housing and a human or electronic interface.

Further details and advantages of the present invention are illustrated in the following based on exemplary embodiments making reference to the attached drawings. The following is depicted in the figures:
- Fig. 1: shows a laboratory instrument according to the invention;
- Fig. 2: shows a flow diagram of a monitoring method according to the invention;
- Fig. 3: shows a signal of an optical flow sensor during aspiration of liquid;
- Fig. 4: illustrates raw sensed data and integration time windows;
- Fig. 5: illustrates integrated and subtracted sensed data with cutoff thresholds derived from figure 4;
- Fig. 6: illustrates a characteristic data set derived from figure 5;
- Fig. 7: illustrates a reconstructed data set derived from figure 6;
- Fig. 8: illustrates another example of reconstructed data with a scan offset value different from zero;
- Fig. 9: illustrates another example of reconstructed data with a scan offset value equal to zero;
- Fig. 10: illustrates another example of reconstructed data without switch points.

The following description of the embodiments is merely exemplary in nature and is in no way intended to limit the invention, its application, or uses. For example, the present invention may find utility in a wide variety of applications, such as in connection with Polymerase Chain Reaction (PCR) measurements; ELISA tests; DNA and RNA hybridizations; antibody titer determinations; protein, peptide, and immuno tests; recombinant DNA techniques; hormone and receptor binding tests; and the like. Additionally, the present invention is particularly well suited for use with luminescence, colorimetric, chemiluminescence, or radioactivity measurement such as scintillation measurements.

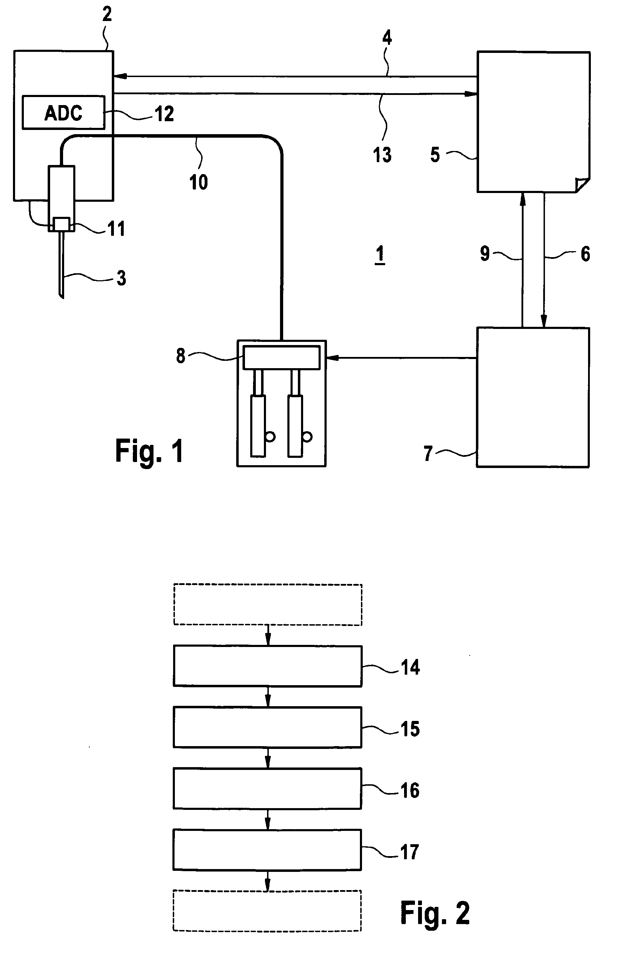

Figure 1 shows a part of a laboratory instrument 1 according to the invention used e.g. in a system for performing laboratory Polymerase Chain Reaction measurements. In general, a laboratory system or a laboratory instrument 1 makes use of standard fluid transfer and manipulative techniques including pipetting, diluting, dispensing, aspirating and plate washing. Conventional assays may be performed, in part, by rapid manipulation of manual pipettors or conducting assays which are piecemeal automated. Heretofore, the measurement portion of the assay, including determining optical or pH parameters, have been entirely manual or semi-automated. Common assays such as ELISA (enzyme linked immunoassay), viral, protein, and other biochemical studies and experimentation require liquid handling such as sample preparation, serial dilution, reagent addition and sample transfer to yield results. Bioassays and chemical experimentation which require making use of such liquid handling techniques, when performed manually, are replete with potential inaccuracies and error. It is difficult for a laboratory technician to accurately dispense the exact amount of liquid in each of the wells on a plurality of microtiter plates. The repetitious nature of liquid handling for experimentation inherently leads to mistakes which cannot always be detected.

The coordinated operation of the automated analytical processing center and instrument 1 is directed by a microprocessor control means. A multi-purpose laboratory instrument 1 is capable of a wide variety of sample preparation and may be used for serial dilution, chemical and biological assays. The multi-purpose laboratory instrument 1 may, for example, be programmed for serial dilution sample preparation.

The laboratory instrument 1 has a plurality of movable interactive components for the controlled dispensing, aspirating and transferring of liquid from a first microtiter plate well or other fluid receptacle to a second microtiter plate well or other second fluid receptacle. The instrument 1 may also function with test tubes, freezing vials, reservoirs and other wet chemistry containers. All fluid receptacles, such as microtiter plates, tip support plates, and troughs may be supported in a movable support table attached to a laboratory instrument base. The movable support table provides support for the microtiter plates and movement of the table is provided by a motor means, causing the table to reciprocally move in at least one axis.

An automated instrument 1 includes a programmable system for the control of a plurality of peripheral devices, such as stepper motors, to coordinate the flexible operation of the movable manipulated components. This control system includes a controller, such as a microprocessor, which transmits instructions to interface components which, in turn, communicate the intelligent instructions of the controller to the motor controller and motors. The interface components include ports to transmit data such as motor direction (clockwise-counterclockwise) and stepping mode (half-steps or full steps) to the motor. The transmission of operational data to the motor is timed by a frequency rate generator which powers the motors for a fixed step duration and a timing device which signals the microprocessor that the stepping cycle has been completed and the interface components are awaiting further microprocessor instructions.

Also included may be a customized interchangeable module selecting mechanism which operates to accomplish (in the fluid dispense system) fluid dispense and aspiration, tip change and eject, and a change of removable manipulative module components by the operation of a single stepping motor driving a lead screw. A plunger body, riding along the extended lead screw, is made to manipulate fluid transport, tip eject, and also controls connection of the module component to the pod.

In an alternative embodiment, other transducer means could be, for example, a pH probe or a temperature transducer. In this manner, a fully integrated multi-purpose laboratory instrument for the conduct of biological and chemical experimental assays is described.

An automated analytical chemistry laboratory system and laboratory instrument 1 may have a movable table for supporting microtiter plates and other fluid receptacles, a movable arm, and a modular mobile pod affixed for reciprocal movement along the arm. The instrument may combine into a single programmable system the capabilities for automation of a wide range of bioanalytical procedures including, not only sample pipetting, serial dilution, reagent additions, mixing, reaction timing and similar known manual procedures, but also programmable spectrophotometric measurements and other physical parameters, further processing based on these measurements and automatic data recording.

The instrument 1 is adapted to transfer, dispense, and aspirate liquid from one location to another automatically in accordance with user programmed instructions. The instrument 1 is capable of measuring physical characteristics of selected samples and performing experimental assays in a closed loop manner in accordance with those measurements.

Fluid is dispensed and aspirated using an interchangeable module having one or a selected plurality of nozzles. Affixed to the modules nozzles are disposable pipettor tips, which are automatically picked up by the pod and ejected by a tip ejector mechanism at the control of the user. Additional modules may be used to perform measurement functions. The instrument 1 may be designed for interactive connection with a remote computer. The laboratory instrument 1 of figure 1 comprises a head controller 2 for controlling the movement an actuator moving a nozzle 3. The head controller 2 receives the movement commands 4 from an instrument control software 5 which also transmits syringe control commands 6 via a robotics controller 7 to a syringe 8 and receives robotics monitoring commands 9 from the robotics controller 7. The syringe 8 is connected via a hose 10 to the nozzle 3.

According to the invention the nozzle 3 comprises a sensor 11 for monitoring the movement of the nozzle 3 and/or the aspiration or ejection of liquid a pipetting device with the nozzle 3. In particular the sensor 11 may be an optical flow sensor. Such an optical flow sensor detects flow parameter based on optical measurement. The optical flow sensor can be e.g. embodied by a light source in combination with a light detector. The sensor 11 provides raw data, which are processed by a data reduction unit 12 to provide characteristic data sets 13, i.e. the main result of the data measured by the sensor 11, that are transferred via a data bus to the instrument control software 5 of a monitoring unit monitoring the operation of the laboratory instrument 1.

Figure 2 shows a flow diagram of a part of a monitoring method according to the invention. The instrument control software 5 starts the positioning 14 of the nozzle 3 and of the moving head and starts the monitoring 15, before the pipetting sequence 16 is performed with the nozzle 3. The characteristic data sets 13 are transferred 17 from the data reduction unit 12 processing the data of the sensor 3 to the instrument control software 5. The characteristic data sets 13 are evaluated by the instrument control software 5 in comparing them with standard or expected data of the pipetting process. In this embodiment the control of the syringe 8 is conventional. However, also the monitoring of the function of the syringe 8 may be performing using characteristic data sets extracted from a syringe sensor.

According to a preferred embodiment said data reduction unit 12 is placed at the laboratory unit 1 from which the sensed data is processed by said unit or placed at a control unit. In figure 1 the data reduction unit 12 is placed at the head controller 2, and therefore not the complete data of the sensor 3 have to be transferred via the transfer 17 to the instrument control software 5 but only a characteristic data set having a smaller data volume.

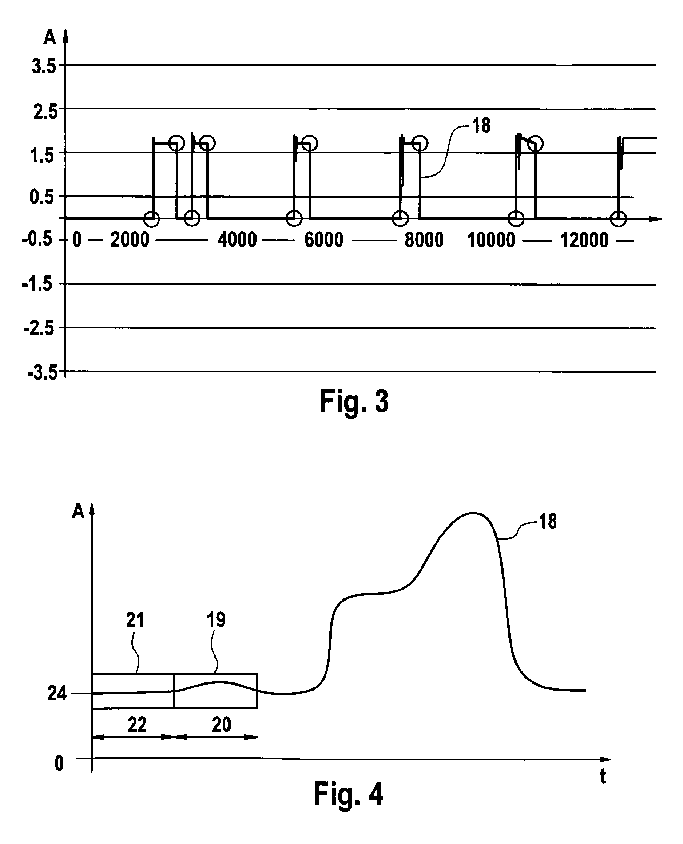

Figure 3 shows the amplitude A of sensed data 18 sensed by a sensor 11 as a function of time t. This are sensed data of an optical flow sensor used and the sensor 11 provides data with a variable scan rate ranging from 1 ms to 1 s with a voltage range from 0 to 5 V. Figure 3 shows the typical signal upon aspiration of liquid sensed by the optical flow sensor 11. When there is a change from liquid to an air bubble or vice versa the sensed signal changes its amplitude A. The monitoring of the laboratory instrument 1 can be performed with just extracting the information related to this amplitude changes from the sensed data 18 an comparing this extracted data, the characteristic data sets 13, with expected values.

The signal 18 represented in figure 3 is to be processed according to the present invention in order to achieve a data reduction. The result of the data reduction are characteristic changes in the sensed data, namely the positions of the edges illustrated by circles in figure 3 and the amplitude values A at that positions. These reduced data are transmitted as characteristic data sets 13 as a response of the optical flow sensor commands to the laboratory instrument control software 5. Depending on the specific use the pipetting procedure is recorded and evaluated in single phases. The evaluation of the complete pipetting procedure measured by the optical flow sensor 11 is performed on another or higher level, i.e. the data are sampled with a high sample frequency in the firmware and reduced, but evaluated at another level.

The evaluation is performed by a laboratory instrument 1 of a laboratory system with function monitoring, the laboratory instrument 1 comprising a laboratory unit, which is the pipetting device with the nozzle 3, the sensor 11, sensing the flow as a parameter of the laboratory unit and providing sensed data 18 regarding said parameter, said sensed data having a data volume.

According to the invention a data reduction unit 12 processes said sensed data 18 received from the sensor 11 and generates characteristic data sets 13 from the sensed data at an output port, said characteristic data sets 13 corresponding to some of said sensed data 18 received from the sensor 11 and having a lower data volume than said sensed data 18 received from the sensor 11. The characteristic data sets 13 do not comprise all of the data information of the sensed data 18, therefore they correspond only to some of said sensed data 18, and the characteristic data sets 13 do not have to comprise the data information of the sensed data 18 precisely, therefore they may correspond to only some of said sensed data 18.

The laboratory instrument 1 may comprise a data reconstruction unit 12 receiving said characteristic data sets 13 or corresponding characteristic data sets at an input port and providing at an output port reconstructed data 31, wherein said reconstructed data 31 are reconstructed from the characteristic data sets 13 and correspond approximately to the sensed data 18. The laboratory instrument 1 may further comprise a monitoring unit receiving said corresponding characteristic data sets 13 from the output port of the data reconstruction unit and monitoring the function of said laboratory unit 1. Preferably the data reconstruction unit is placed at the laboratory unit 1 from which the sensed data is processed by said unit or placed at a control unit.

Figure 4 illustrates a first step of a data reduction procedure according to the invention in which the data reduction unit determines characteristic changes in the sensed data 18 providing characteristic data sets 13 which preferably comprise the time of occurrence of said characteristic changes and/or the amplitude of said characteristic changes. In particular, as shown in figure 4 the data reduction unit may determine said characteristic changes from the sensed data 18 by continuously integrating the sensed data 18 over a first integration time window 19 with a first time scan length 20 to provide a preceding integrated value, continuously integrating the sensed data 18 over a second integration time window 21 with a second time scan length 22 to provide a subsequent integrated value, said second integration time window 21 following the first time integration time window 19 in time t, preferably directly without time gap between said first 19 and second 21 time window, and continuously forming the difference between the preceding integrated value and the subsequent integrated value to provide a difference signal 23. The first and second time scan length can be adjusted to the properties of the signal. Said second time scan length 22 has preferably the same size as the first time scan length 20. In figure 4 the sensed data 18 has an offset 24.

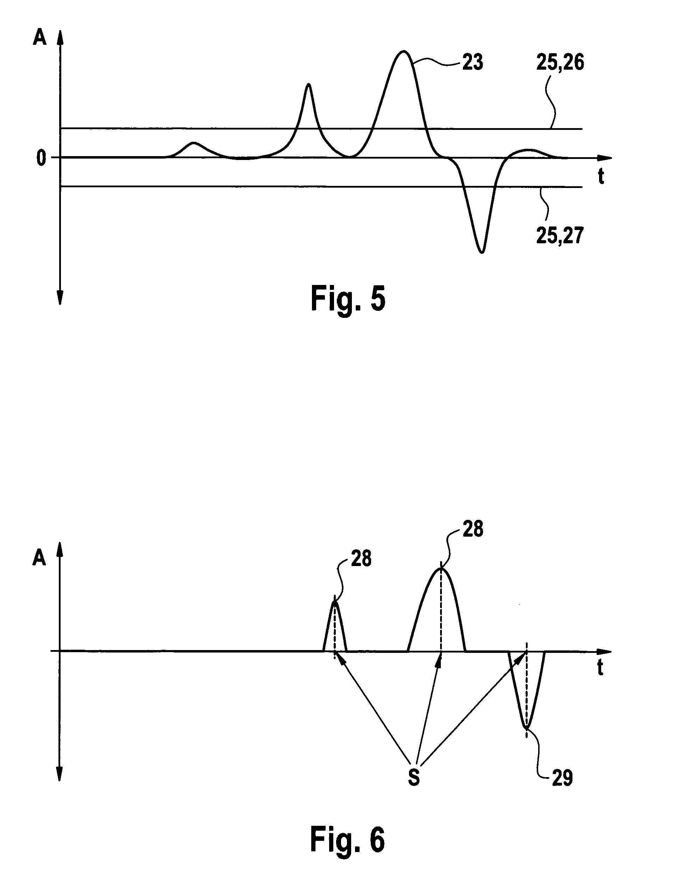

Figure 5 shows the difference signal 23 resulting from figure 4, namely the sum of the amplitudes of the sensed data 18 in the first integration time window 19 minus the sum of the amplitudes of the sensed data 18 in the second integration time window 19, thus providing the new difference signal 23 related to zero. In the next step the data reduction unit may determine the characteristic changes from the sensed data 18 by subtracting a cutoff threshold value 25 from the difference signal, wherein preferably the cutoff threshold value 25 has a positive value 26 when the difference signal 23 has a positive value and the subtracted cutoff threshold value 25 has a negative value 27 when the difference signal 23 has a negative value. By cutting of a cutoff value 25 small asymmetries and interferences are masked.

Figure 6 illustrates how qualifiers of said characteristic changes in the form of switch points S are extracted from the difference signal 23. Generally the characteristic data sets 13 further may comprise a qualifier of said characteristic changes. The qualifier determined by the data reduction unit and comprised in the characteristic data set 13 may comprise one or several of the following parameters: the switch points S in time related to the time when said difference signal 23 exceeds or falls below said cutoff threshold 25, the switch points S in time when the difference signal 23 reaches a maximum 28 or minimum 29 peak, the switch points in time when the difference signal 23 reduced by said cutoff threshold value 25 reaches a maximum 28 or minimum 29 peak, the amplitudes A representing the maximum 28 or minimum 29 values of the peaks of the difference signal 23, the amplitudes A representing the maximum 28 or minimum 29 values of the peaks of the difference signal 23 reduced by said cutoff threshold value 25, preceding integrated values, subsequent integrated values. In figure 6 the switch points S are set to the positive and negative maximum of the peaks i.e. to the maximum 28 and minimum 29 values of the peaks of the difference signal 23.

In addition the mean value of the sensed data 18 before and after an edge as a mean value during the scan length 20, 22 having an offset 24 may be provided. The offset 24 is determined with a parameter scan offset 30. If the scan offset 30 is set to zero, the mean values are determined independently from the scan length 20, 22 between the switch points S.

Further the reduction unit may determine an offset 24 in the sensed signal 18 by forming the mean value of the preceding integrated value and the subsequent integrated value related to a characteristic change, wherein the mean value is normalized with the time scan length 20, 22.

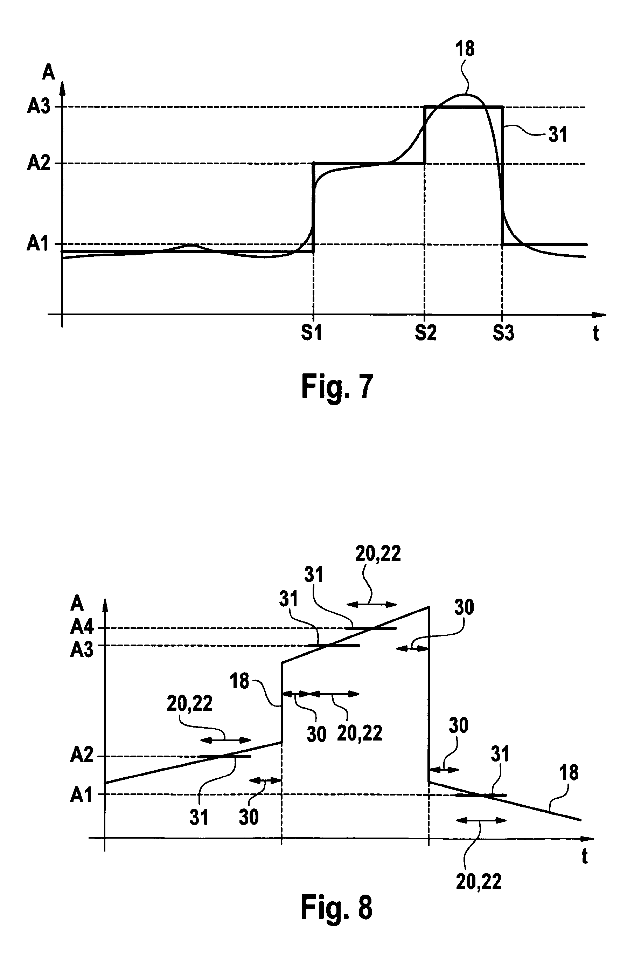

Figure 7 shows an example of a data reconstruction unit receiving said characteristic data sets 13 at an input port and providing at an output port reconstructed data 31, wherein said reconstructed data 31 are reconstructed from the characteristic data sets 13 and correspond approximately to the sensed data 18. Figure 7 shows the sensed data 18 of figure 4 and the corresponding reconstructed data 31 achieved according to a procedure described in figures 4 to 6 from a characteristic data set comprising switch points S1, S2, S3 and related amplitudes A1, A2 and A3. It can be seen that the reconstructed data 31 correspond approximately to the sensed data 18 with an accuracy that is sufficient for sensor data and control data in a laboratory instrument 1. However, from figure 7 it is clear that much less bus capacity is required for transmitting the reconstructed data 31 or the characteristic data set 13 or the qualifiers, e.g. the switch points and amplitudes, than the original continuous sensed data 18. This makes it possible to reduce the load on a data bus in a laboratory instrument 1 or to use a bus with less transfer capacity for monitoring and/or controlling the function of a laboratory unit of the laboratory instrument 1.

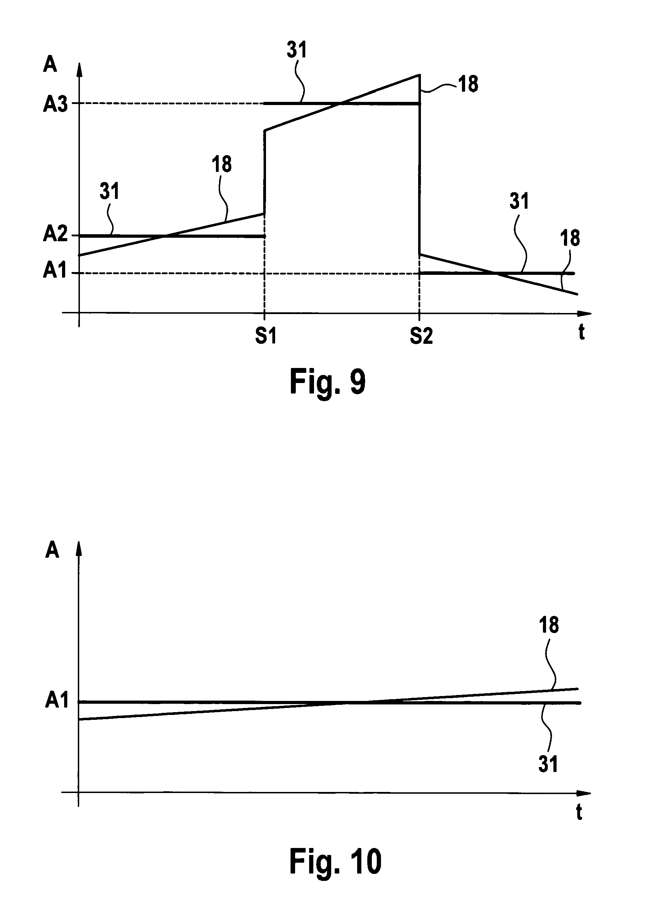

Figures 6 to 8 illustrate examples of reconstructed data 31 with different offset values 24. In Figure 8 are two switch points S1, S2 and the scan offset 30 is different from zero. In Figure 9 are two switch points S1, S2 and the scan offset 30 is equal to zero. Figure 10 is an example without switch points.

### Reference numerals

- 1: laboratory instrument
- 2: head controller
- 3: nozzle
- 4: movement commands
- 5: instrument control software
- 6: syringe control commands
- 7: robotics controller
- 8: syringe
- 9: robotics monitoring commands
- 10: hose
- 11: sensor
- 12: data reduction unit
- 13: characteristic data sets
- 14: positioning
- 15: monitoring
- 16: pipetting sequence
- 17: transfer
- 18: sensed data
- 19: first integration time window
- 20: first time scan length
- 21: second integration time window
- 22: second time scan length
- 23: difference signal
- 24: offset
- 25: cutoff threshold value
- 26: positive value of 25
- 27: negative value of 24
- 28: maximum
- 29: minimum
- 30: scan offset
- 31: reconstructed data
- A: amplitude
- S: switch point
- t: time

## Claims

1. Laboratory instrument (1) of a laboratory system with function monitoring of at least one function of said laboratory instrument (1), said laboratory instrument (1) comprising
- a laboratory unit,
- a sensor (11), sensing a parameter of the laboratory unit and providing sensed data (18) regarding said parameter, said sensed data (18) having a data volume,
- a data reduction unit (12) processing said sensed data (18) received from the sensor (11) and generating characteristic data sets (13) from the sensed data (18) at an output port, said characteristic data sets (13) having a lower data volume than said sensed data (18) received from the sensor (11), and
- the laboratory instrument (1) or the laboratory system further comprising a monitoring unit receiving said characteristic data sets (13) from the output port of the data reduction unit (12) and monitoring the function of said laboratory unit on the basis of said characteristic data sets (13).

2. Laboratory instrument (1) according to claim 1, further comprising a workflow unit having stored therein a pattern of characteristic workflow data and further comprising a comparison unit for comparing said characteristic workflow data to said characteristic data sets (13) or to corresponding characteristic data sets corresponding to said characteristic data sets (13).

3. Laboratory instrument (1) according to the preceding claim, further comprising an indication unit, said indication unit providing an indication if said comparison unit detects a mismatch between said characteristic workflow data and said characteristic data sets (13) or corresponding characteristic data sets.

4. Laboratory instrument (1) according to any of the preceding claims, wherein the laboratory unit is a pipetting device for aspiration and/or withdrawal of a fluid and said sensor (11) is adapted to monitor a condition of said pipetting device or a fluidic condition, parameter or level of fluid pipetted by said pipetting device.

5. Laboratory instrument (1) according to any of the preceding claims, wherein the laboratory unit is an actuation unit and said sensor (11) is adapted to sense a parameter of said actuation unit or a parameter of a device actuated by said actuation unit.

6. Laboratory instrument (1) according to any of the preceding claims, wherein the laboratory unit comprises a data reconstruction unit receiving said characteristic data sets (13) or corresponding characteristic data sets at an input port and providing at an output port reconstructed data (31), wherein said reconstructed data (31) are reconstructed from the characteristic data sets (13) and correspond approximately to the sensed data (18).

7. Laboratory instrument (1) according to any of the preceding claims, wherein said data reduction unit (12) is designed to determine characteristic changes in said sensed data and wherein said characteristic data sets (13) or said corresponding characteristic data sets comprise the time of occurrence of said characteristic changes and/or the amplitude of said characteristic changes.

8. Laboratory instrument (1) according to the preceding claim, wherein said data reduction unit (12) is designed to determine said characteristic changes from said sensed data by
- continuously integrating the sensed data (18) over a first integration time window (19) with a first time scan length (20) to provide a preceding integrated value,
- continuously integrating the sensed data (18) over a second integration time window (21) with a second time scan length (22) to provide a subsequent integrated value,
- said second integration time window (21) following the first time integration time window (19) in time, preferably directly without time gap between said first and second time window,
- and continuously forming the difference between the preceding integrated value and the subsequent integrated value to provide a difference signal (23).

9. Laboratory instrument (1) according to the preceding claim, wherein said data reduction unit (12) is designed to determine said characteristic changes from said sensed data (18) by subtracting a cutoff threshold value (25) from the difference signal (23), wherein preferably the cutoff threshold value (25) has a positive value when the difference signal (23) has a positive value and the subtracted cutoff threshold value (25) has a negative value when the difference signal (23) has a negative value.

10. Laboratory instrument (1) according to any of claims 7 to 9, said characteristic data sets (13) or said corresponding characteristic data sets further comprising a qualifier of said characteristic changes.

11. Laboratory instrument (1) according to the preceding claim, wherein the qualifier determined by said data reduction unit (12) and comprised in said characteristic data set (13) or said corresponding characteristic data set comprises one or several of the following parameters: the switch points (S) in time related to the time when said difference signal (23) exceeds or falls below said cutoff threshold (25), the switch points (S) in time when the difference signal (23) reaches a maximum (28) or minimum (29) peak, the switch points (S) in time when the difference signal (23) reduced by said cutoff threshold value (25) reaches a maximum (28) or minimum (29) peak, the amplitudes representing the maximum (28) or minimum (29) values of the peaks of the difference signal (23), the amplitudes representing the maximum (28) or minimum (29) values of the peaks of the difference signal (23) reduced by said cutoff threshold value (25), preceding integrated values, subsequent integrated values.

12. Laboratory instrument (1) according to any of the preceding claims, wherein said data reduction unit (12) is placed at the laboratory unit from which the sensed data is processed by said unit or placed at a control unit.

13. Laboratory instrument (1) according to any of the preceding claims, wherein said monitoring unit is designed to control the laboratory unit in response to the received characteristic data sets (13) or corresponding characteristic data sets.

14. Laboratory system comprising a laboratory instrument (1) according to any of the preceding claims.

15. Method for monitoring at least one function of a laboratory instrument (1) of a laboratory system with function monitoring, comprising
- sensing a parameter of a sensor (11) of the laboratory unit, said sensor (11) providing sensed data (18) regarding said parameter, said sensed data (18) having a data volume,
- processing said sensed data (18) received from the sensor (11) and generating characteristic data sets (13) from the sensed data (18) at an output port of a data reduction unit (12), said characteristic data sets (13) having a lower data volume than said sensed data (18) received from the sensor (11), and
- receiving said characteristic data sets (13) from the output port of the data reduction unit (12) by a monitoring unit of the laboratory instrument (1) or the laboratory system and monitoring the function of said laboratory unit on the basis of said characteristic data sets (13).
